# EUROPÄISCHE PATENTANMELDUNG

(11) **EP 1 870 846 A2**
(43) Veröffentlichungstag der Anmeldung: **26.12.2007**
(21) Anmeldenummer: 07012287.4
(22) Anmeldetag: 22.06.2007
(51) Int. Cl.: G06Q 10/00

(54) **Verfahren zur Bereitstellung produktspezifischer Daten**

(30) Priorität: 22.06.2006 DE 102006028569
(71) Anmelder: Stein, Wolfram, 44791 Bochum (DE)
(72) Erfinder: Stein Wolfram, 44791 Bochum (DE); Fahrig Jan, 58452 Witten (DE)
(74) Vertreter: Stenger, Watzke & Ring

(57) **Zusammenfassung**

Die Erfindung betrifft ein Verfahren zur Bereitstellung produktspezifischer Daten. Um ein Verfahren zu schaffen, das weitestgehend manipulationssicher und darüber hinaus einfach in seiner Handhabung ist, wird mit der Erfindung ein Verfahren vorgeschlagen, bei dem die produktspezifischen Daten eines jeweiligen Produkts von einer hierfür autorisierten Stelle (3) aufgenommen und an eine zentrale Vermittlungsstelle (1) übertragen werden, wobei die produktspezifischen Daten eine das jeweilige Produkt eineindeutig identifizierende Kennung aufweisen, bei dem von der Vermittlungsstelle (1) die an die Vermittlungsstelle (1) übertragenen Daten automatisch aufbereitet und auf Plausibilität geprüft werden, bei dem auf Anfrage eines Dritten (4) eine kommunikationstechnische Verbindung zwischen dem Dritten (4) und der Vermittlungsstelle (1) aufgebaut wird und bei dem von der Vermittlungsstelle (1) nach vorheriger Mitteilung der das jeweilige Produkt eineindeutig identifizierenden Kennung durch den Dritten (4) die produktspezifischen Daten an den Dritten (4) übermittelt werden.

## Beschreibung

Die Erfindung betrifft ein Verfahren zur Bereitstellung produktspezifischer Daten.

"Produktspezifische Daten" im Sinne der Erfindung sind Daten, die ein Produkt bzw. dessen Zustand charakterisieren. Dabei sind im Sinne der Erfindung unter "Produkt" Produkte jeglicher Art zu verstehen. Bevorzugterweise handelt es sich bei einem "Produkt" um ein Kraftfahrzeug, wobei die "produktspezifischen Daten" Auskunft über das Fahrzeug als solches bzw. dessen Zustand geben.

Bei Kraftfahrzeugen, wie zum Beispiel Pkws, Lkws oder Motorrädern ist es bekannt, ein Scheckheft zu führen, in welchem die kraftfahrzeugtypischen Daten, das heißt die produktspezifischen Daten fortlaufend festgehalten werden. So dient das Scheckheft insbesondere dazu, Werkstattaufenthalte zu dokumentieren, Reparaturen oder durchgeführte Arbeiten festzuhalten oder in der Zukunft anstehende Überprüfungen terminlich anzugeben. Der Kraftfahrzeugeigentümer bzw. -besitzer kann so jedem Dritten gegenüber die ordnungsgemäße Wartung und Pflege seines Kraftfahrzeuges dokumentieren, was insbesondere im Falle eines Verkaufes von Vorteil ist. Anhand des Scheckheftes ist es auch für die das Kraftfahrzeug wartende Werkstatt möglich, in der Vergangenheit durchgeführte Reparaturen oder Arbeiten auf einen Blick nachvollziehen zu können. Die lückenlose Pflege eines Scheckheftes ist aus diesem Grunde angeraten und notwendig.

Scheckhefte der vorgenannten Art haben sich jedoch insofern als nachteilig herausgestellt, als daß sie, da sie vom Kraftfahrzeugeigentümer bzw. -besitzer mitgeführt werden, verloren gehen können und darüber hinaus nicht fälschungssicher sind, weshalb ein Dritter von der Richtigkeit der im Scheckheft aufgeführten produktspezifischen Daten nicht zwingend ausgehen kann.

Zur Überwindung der vorstehend aufgeführten Nachteile ist es die Aufgabe der Erfindung, ein Verfahren zur Bereitstellung produktspezifischer Daten anzugeben, das weitestgehend manipulationssicher und darüber hinaus einfach in seiner Handhabung ist.

Zur Lösung dieser Aufgabe wird mit der Erfindung vorgeschlagen ein Verfahren zur Bereitstellung produktspezifischer Daten, bei dem die produktspezifischen Daten eines jeweiligen Produkts von einer hierfür autorisierten Stelle aufgenommen und an eine zentrale Vermittlungsstelle übertragen werden, wobei die produktspezifischen Daten eine das jeweilige Produkt eineindeutig identifizierende Kennung aufweisen, bei dem von der Vermittlungsstelle die an die Vermittlungsstelle übertragenen produktspezifischen Daten automatisch aufbereitet und auf Plausibilität geprüft werden, bei dem auf Anfrage eines Dritten eine kommunikationstechnische Verbindung zwischen dem Dritten und der Vermittlungsstelle aufgebaut wird und bei dem von der Vermittlungsstelle nach vorhergehender Mitteilung der das jeweilige Produkt eineindeutig identifizierenden Kennung durch den Dritten die produktspezifischen Daten an den Dritten übermittelt werden.

Mit dem erfindungsgemäßen Verfahren wird mit Bezug auf den bevorzugten Anwendungsfall des Kraftfahrzeuges als Produkt ein elektronisches Scheckheft zur Verfügung gestellt, welches auch von Dritten eingesehen werden kann. Gegenüber aus dem Stand der Technik bekannten Scheckheften ist das elektronische Scheckheft nach dem erfindungsgemäßen Verfahren weitestgehend manipulationssicher, weil eine Dateneingabe bzw. -änderung nur durch eine autorisierte Stelle vorgenommen werden kann. Ein sich für die produktspezifischen Daten eines Kraftfahrzeuges interessierender Dritter kann insofern sicher sein, daß der Eigentümer bzw. Besitzer des zugehörigen Kraftfahrzeuges keine Manipulation an den hinterlegten produktspezifischen Daten vorgenommen haben kann.

Darüber hinaus ist von Vorteil, daß eine Abfrage der produktspezifischen Daten durch den Dritten selbst erfolgen kann, er also unabhängig von einem beim Fahrzeugeigentümer bzw. -besitzer unter Umständen vorhandenen Scheckheft produktspezifische Daten abfragen kann. Insofern erweist sich das erfindungsgemäße Verfahren als äußerst einfach in der Durchführung.

Gemäß dem erfindungsgemäßen Verfahren ist vorgesehen, daß die produktspezifischen Daten eines jeweiligen Produkts, das heißt beispielsweise eines Kraftfahrzeuges von einer hierfür autorisierten Stelle, beispielsweise einer autorisierten Werkstatt aufgenommen und an eine zentrale Vermittlungsstelle übertragen werden. Dabei handelt es sich bei den produktspezifischen Daten um reine fahrzeugtechnische Daten, wie zum Beispiel Kilometerstände, Informationen zu durchgeführten Inspektionen, Reparaturen, Werkstattarbeiten und Unfallbeseitigungen, Garantiezeiten oder dergleichen. Ferner gehört zu den produktspezifischen Daten eine das jeweilige Produkt eineindeutig identifzierende Kennung, die beispielsweise im Falle eines Kraftfahrzeuges durch die Fahrgestellnummer gegeben ist. Als weitere Daten können auch personenbezogene Daten hinsichtlich des Produktes aufgenommen werden, wie zum Beispiel der Name des Fahrzeughalters, das amtliche Kennzeichen oder dergleichen. Die Aufnahme von personenbezogenen Daten ist allerdings optional, wobei in diesem Zusammenhang bevorzugterweise vorgesehen ist, daß die personenbezogenen Daten nicht von einem Dritten, sondern - wenn überhaupt - nur vom Eigentümer des Fahrzeuges abgefragt werden können.

Die Aufnahme der produktspezifischen Daten erfolgt aus Gründen der Manipulationssicherheit ausschließlich durch eine hierfür autorisierte Stelle. Der Fahrzeugeigentümer bzw. -besitzer kann eine Aufnahme der produktspezifischen Daten selbst nicht vornehmen, so daß für einen Dritten sichergestellt ist, daß die von der Vermittlungsstelle zur Abfrage bereitgestellten produktspezifischen Daten auch tatsächlich richtig, das heißt dem tatsächlichen Zustand des Kraftfahrzeuges entsprechen.

Für eine Aufnahme der produktspezifischen Daten überläßt der Fahrzeugeigentümer bzw. -besitzer sein Fahrzeug der zur Aufnahme der produktspezifischen Daten autorisierten Stelle, das heißt beispielsweise der Werkstatt. Diese nimmt nach eingehender Prüfung des Fahrzeuges die produktspezifischen Daten auf, die alsdann nach ihrer Aufnahme an eine zentrale Vermittlungsstelle übertragen werden. Für eine spätere Zuordnung der produktspezifischen Daten enthalten diese eine das jeweilige Produkt, das heißt das Fahrzeug eineindeutig identifizierende Kennung, welche bevorzugterweise durch die seitens des Herstellers des Kraftfahrzeuges vergebene Fahrgestellnummer gegeben sein kann.

Die an die zentrale Vermittlungsstelle übertragenen Daten werden von dieser automatisch aufbereitet und auf Plausibilität überprüft. So läßt sich beispielsweise anhand der Fahrgestellnummer das Produktionsjahr eines Kraftfahrzeuges feststellen. Sollte das Produktionsjahr von der hierfür autorisierten Stelle falsch, das heißt nicht in Übereinstimmung mit der Fahrgestellnummer eingegeben worden sein, so wird dies von der Vermittlungsstelle aufgrund der von ihr durchgeführten Plausibilitätsprüfung erkannt und der für die Eingabe der Daten autorisierten Stelle mitgeteilt. Plausibilitätsprüfungen können zudem anhand von an die Vermittlungsstelle zuvor bereits übertragenen Daten vorgenommen werden. So läßt sich insbesondere der Kilometerstand eines Kraftfahrzeuges auf Plausibilität überprüfen. Sollte beispielsweise der angegebene Kilometerstand mit einem zuvor der Vermittlungsstelle bereits mitgeteilten Kilometerstand insofern nicht zusammenpassen, als daß der neu eingegebene Kilometerstand unter dem der Vermittlungsstelle bereits bekannten Kilometerstand liegt, so ergibt die von der Vermittlungsstelle automatisch durchgeführte Plausibilitätsprüfung, daß ein Eingabefehler vorliegt, was entweder dazu führen kann, daß die eingegebenen Daten von der Vermittlungsstelle nicht akzeptiert werden oder daß ein entsprechender Vermerk vom Vermittlungssystem bezüglich dieser nicht plausiblen Daten eingerichtet wird.

Der Fahrzeugeigentümer bzw. -besitzer kann entweder selbst oder über seine Werkstatt, das heißt die für die Dateneingabe autorisierte Stelle eine Datenabfrage vornehmen. Die der Vermittlungsstelle mitgeteilten Daten werden von der Vermittlungsstelle gespeichert und können im Bedarfsfall wiederholt abgerufen werden. Ein vom Fahrzeugeigentümer bzw. -besitzer mitgeführter Ausdruck der bei der Vermittlungsstelle hinterlegten Daten kann deshalb in vorteilhafter Weise im Falle eines Verlustes auf einfache Weise neu erstellt werden.

Die produktspezifischen Daten dienen in vorteilhafter Weise dazu, eine lückenlose Historie des Fahrzeuges bezüglich der fahrzeugspezifischen Daten bereitzustellen. Der Fahrzeugeigentümer bzw. -besitzer bzw. -halter ist so in vorteilhafter Weise in der Lage, jederzeit lückenlos darlegen zu können, welche Inspektionen, Reparaturen, Werkstattarbeiten und dergleichen an seinem Fahrzeug durchgeführt wurden. Zudem gibt das elektronische Scheckheft darüber Auskunft, welche Arbeiten zu welchen Kilometerständen durchgeführt worden sind, ob die Wartungsintervalle korrekt eingehalten worden sind und welche zukünftigen Wartungsintervalle einzuhalten sind.

Ganz allgemein läßt sich sagen, daß die nach dem erfindungsgemäßen Verfahren aufzunehmenden und an die zentrale Vermittlungsstelle zu übertragenden produktspezifischen Daten über das Produkt und seinen Werdegang hinsichtlich aller relevanter Faktoren Auskunft geben.

Erfindungsgemäß ist vorgesehen, daß die an die Vermittlungsstelle übertragenen Daten von einem Dritten abgefragt werden können. Auf Anfrage eines Dritten wird zu diesem Zweck eine kommunikationstechnische Verbindung zwischen dem Dritten einerseits und der Vermittlungsstelle andererseits aufgebaut. Die Vermittlungsstelle übermittelt die produktspezifischen Daten an den Dritten nach vorhergehender Mitteilung der das jeweilige Produkt eineindeutig identifizierenden Kennung durch den Dritten. Dabei kann eine kommunikationstechnische Verbindung zwischen dem Dritten und der Vermittlungsstelle via Telefon, Internet oder dergleichen aufgebaut werden. So ist beispielsweise eine kommunikationstechnische Verbindung mittels SMS oder E-Mail möglich.

Der Aufbau einer kommunikationstechnischen Verbindung zwischen dem Dritten einerseits und der Vermittlungsstelle andererseits kann bevorzugterweise über das Telefon, und zwar das Mobiltelefon, das heißt das Handy aufgebaut werden. Eine kommunikationstechnische Verbindung via Handy hat den Vorteil, daß der Dritte jederzeit und an jedem Ort Daten wunschgemäß über die Vermittlungsstelle abfragen kann. Eine Datenabfrage über das Handy wird insofern der Anforderung "any time any place" gerecht. Der Dritte ist nicht darauf angewiesen, einen Rechner zur Verfügung zu haben. Öffnungszeiten oder dergleichen sind ebenso nicht zu beachten. Eine Informationsvermittlung rund um die Uhr ist vielmehr möglich, womit das erfindungsgemäße Verfahren zusätzlich an Attraktivität gewinnt, weil es von interessierten Dritten spontan genutzt werden kann.

Zum Zwecke der Datenabfrage tritt der Dritte mit der Vermittlungsstelle in kommunikationstechnische Verbindung und teilt diesem die das jeweilige und ihn interessierende Produkt, das heißt das Kraftfahrzeug eineindeutig identifizierende Kennung mit, beispielsweise die Fahrgestellnummer. Die Vermittlungsstelle übermittelt daraufhin an den Dritten die unter dieser eineindeutigen Kennung gespeicherten Daten. Auf diese Weise erhält der Dritte auf einfache Weise und sehr zeitnah die vom Vermittlungssystem bereitgestellten Daten. Im Falle eines Kraftfahrzeuges sind dies die Daten, die das elektronische Scheckheft ausmachen. Ein Dritter kann sich so vollumfänglich über die Historie eines Kraftfahrzeuges anhand der produktspezifischen Daten des elektronischen Scheckheftes informieren. Da die Eingabe dieser Daten manipulationssicher erfolgt, kann der Dritte sicher sein, daß die Daten den tatsächlichen Zustand des von ihm angefragten Fahrzeuges wiedergeben.

Damit der Dritte eine Abfrage vornehmen kann, muß er hinsichtlich des abzufragenden Produktes, das heißt des Kraftfahrzeuges um die das Kraftfahrzeug eineindeutig identifizierende Kennung, beispielsweise die Fahrgestellnummer Bescheid wissen. Diese erhält er auf Anfrage vom Fahrzeugeigentümer bzw. -besitzer. Wenn der Fahrzeugeigentümer bzw. -besitzer beispielsweise plant, sein Kraftfahrzeug zu verkaufen, so kann er einem Kaufinteressenten die Fahrgestellnummer mitteilen, so daß sich dieser dann daraufhin unter Nennung der Fahrgestellnummer an die zentrale Vermittlungsstelle wenden kann, um sich anhand des elektronischen Scheckheftes über die Historie des zum Verkauf stehenden Kraftfahrzeuges vollumfänglich zu informieren.

Gemäß einem besonderen Vorschlag der Erfindung ist die eineindeutig identifizierende Kennung am Fahrzeug selbst angebracht. Diese Ausgestaltung hat den Vorteil, daß im Vorfeld einer Vermittlung der fahrzeugspezifischen Daten an den Dritten keine Kommunikation zwischen dem Dritten und dem Fahrzeugeigentümer beziehungsweise -besitzer stattfinden muß. Der interessierte Dritte übernimmt die am Fahrzeug angebrachte eineindeutige Kennung und kann dann ohne weiteres mit der Vermittlungsstelle zur Abfrage produktspezifischer Daten in Kontakt treten. Insbesondere aus datensicherheitstechnischen Gründen ist dabei die am Fahrzeug angebrachte Kennung manuell, das heißt für den Dritten inhaltlich nicht erfaßbar. Dies kann beispielsweise dadurch erreicht werden, daß die Kennung verschlüsselt oder codiert und deshalb nur maschinenlesbar ist. Als ein Beispiel sei der Barcode genannt. Der Fahrzeugbesitzer beziehungsweise -eigentümer kann an seinem Fahrzeug die eineindeutige Kennung in Form eines Barcodes anbringen. In codierter Form enthält dieser Barcode die eineindeutige Kennung, beispielsweise in Form der Fahrgestellnummer des Fahrzeugs. Ein Dritter, der über dieses Fahrzeug fahrzeugspezifische Informationen in Erfahrung bringen möchte, überträgt diesen Barcode an die Vermittlungsstelle. Dabei kann der Dritte den Barcode selbst nicht entschlüsseln, so daß ihm die eineindeutige Kennung wie beispielsweise die Fahrgestellnummer nicht bekannt gemacht wird. Der an die Vermittlungsstelle übertragene Barcode wird von dieser entschlüsselt, die eineindeutige Kennung wird herausgelesen und alsdann können die zu dieser eineindeutigen Kennung gehörenden Daten, das heißt die fahrzeugspezifischen Daten an den anfragenden Dritten übersandt werden. Die Barcodeübertragung seitens des Dritten an die Vermittlungsstelle kann beispielsweise via Foto-Handy erfolgen. Der am Fahrzeug angebrachte Barcode wird mittels des im Handy integrierten Fotoapparates bildtechnisch erfaßt und aufgenommen. In gespeicherter Form wird dieses vom Foto-Handy aufgenommene Bild an die Vermittlungsstelle übertragen, wo dann in schon vorbeschriebener Weise eine Entschlüsselung des Barcodes stattfindet.

Die Besonderheit der vorbeschriebenen Verfahrensvariante besteht darin, daß sie vollends automatisiert ist. Eingabefehler können vermieden werden. Es bedarf auch keiner Kommunikation mehr zwischen dem interessierten Dritten und dem Fahrzeugbesitzer beziehungsweise -eigentümer. Der Dritte kann deshalb unabhängig von einer möglichen Kommunikationsbereitschaft des Fahrzeugbesitzers und/oder -eigentümers zu jeder Zeit eine Datenbankabfrage vornehmen.

Gemäß einem besonderen Vorteil der Erfindung ist vorgesehen, daß die Kosten für die Datenübermittlung an den Dritten dem Dritten automatisch in Rechnung gestellt werden. In diesem Zusammenhang kann gemäß einem weiteren Merkmal der Erfindung vorgesehen sein, daß vor einer Datenübermittlung an den anfragenden Dritten von der Vermittlungsstelle zunächst überprüft wird, ob eine Übernahme der durch die Abfrage entstehenden Kosten durch den Dritten überhaupt möglich ist. Bei einer Kommunikation via Telefon kann beispielsweise überprüft werden, ob die Rufnummer des Dritten gültig ist und insofern eine Inrechnungstellung über die Telefonrechnung erlaubt. Bei einer Kommunikation via Internet, beispielsweise via E-Mail kann beispielsweise überprüft werden, ob eine von dem anfragenden Dritten zum Zwecke der Bezahlung angegebene Kreditkartennummer für eine gültige und belastbare Kreditkarte steht. Es kann des weiteren vorgesehen sein, daß im Falle eines Dritten, der in der Vergangenheit wegen Nicht-Zahlung oder verspäteter Zahlung aufgefallen ist, ein Sperrvermerk in die Datenbank der Vermittlungsstelle aufgenommen wird.

Gemäß einem weiteren Merkmal der Erfindung ist vorgesehen, daß bei dem Verfahren die produktspezifischen Daten eines jeweiligen Produkts in Abfrageklassen unterteilt werden. So kann beispielsweise eine Unterteilung in rein fahrzeugspezifischen Daten einerseits und personenbezogene Daten andererseits vorgenommen werden. Die personenbezogenen Daten können nur vom Eigentümer bzw. Besitzer des Produktes, das heißt des Fahrzeuges abgefragt werden. Die rein fahrzeugspezifischen Daten stehen hingegen auch für eine Abfrage durch Dritte zur Verfügung. Des weiteren kann bezüglich der rein fahrzeugspezifischen Daten eine weitere Unterteilung in Klassen vorgenommen werden, gemäß welcher Unterschiede bezüglich der vom Dritten zu übernehmenden Kosten gemacht werden kann. So ist es beispielsweise denkbar, daß ein allgemeiner Datensatz und bei Bedarf ein um zusätzliche Daten ergänzter erweiterter Datensatz abfragbar ist, wobei die Abfrage des erweiterten Datensatzes zusätzliche Kosten erzeugt. Dem abfragenden Dritten wird so die Möglichkeit gegeben, die für eine Datenabfrage in Rechnung gestellten Kosten zu reduzieren.

Die Unterteilung der fahrzeugspezifischen Daten in Klassen oder Kategorien kann zudem dazu genutzt werden, dem Dritten besondere Abfragealgorithmen zur Verfügung zu stellen. So kann beispielsweise vorgesehen sein, dem Dritten die Möglichkeit zu bieten, Ausschlußkriterien und/oder besondere Prioritäten bei seiner Abfrage vorzugeben. In einer erweiterten Anwendung des erfindungsgemäßen Verfahrens kann dabei vorgesehen sein, produktspezifische Daten unterschiedlicher Fahrzeuge seitens der Vermittlungsstelle zu vergleichen und auf Anfrage des Dritten an diesen zu übertragen. So wird beispielsweise mit Vorteil vorgeschlagen, daß der Dritte, der sich für ein bestimmtes Fahrzeug interessiert, einen Vergleich der Daten dieses Fahrzeugs mit anderen vergleichbaren und der Vermittlungsstelle bekannten Fahrzeugen vornimmt. Darüber hinaus erlaubt die Klasseneinteilung eine gezielte Abfrage zugunsten des Dritten. So kann der Dritte sich beispielsweise Fahrzeuge anzeigen lassen, die eine bestimmte Eigenschaft aufweisen, beispielsweise eine bestimmte Laufleistung nicht überschritten haben. Auf diese Weise wird insbesondere Transparenz zugunsten des Dritten geschaffen. So kann beispielsweise vorgesehen sein, daß der Dritte bezüglich eines ihn interessierenden Fahrzeuges bei der Vermittlungsstelle anfragt, wie es um den Wartungsstand dieses Fahrzeuges im Vergleich zu anderen Fahrzeugen bestellt ist.

Gemäß einem weiteren Merkmal der Erfindung kann vorgesehen sein, daß bei dem Verfahren die produktspezifischen Daten einer Mehrzahl von Produkten miteinander verglichen werden. In diesem Zusammenhang ist es beispielsweise denkbar, daß der anfragende Dritte anonymisierte Vergleichsdaten erhält. Auf diese Weise wird für den anfragenden Dritten zusätzliche Transparenz geschaffen.

Im Rahmen eines Vergleichs von produktspezifischen Daten kann beispielsweise vorgesehen sein, eine Art Ranking zu erstellen. Der Dritte kann so auf einen Blick eine Einschätzung darüber erhalten, wie das ihn interessierende Fahrzeug bei einem Vergleich mit anderen Fahrzeugen abschneidet. So läßt sich beispielsweise vergleichen, wie sich die Laufleistung eines Fahrzeuges, der betriebene Wartungsaufwand und der geforderte Kaufpreis bei unterschiedlichen Fahrzeugen zueinander stellen. Dies schafft besondere Transparenz für den Dritten, da dieser unmittelbar vergleichen kann.

Gemäß einem weiteren Merkmal der Erfindung kann vorgesehen sein, daß bei dem Verfahren die produktbezogenen Daten von der Vermittlungsstelle statistisch ausgewertet werden. Insbesondere für Autowerkstätten läßt sich so die Kundentreue feststellen und analysieren.

Das erfindungsgemäße Verfahren eignet sich insbesondere zur Bereitstellung von fahrzeugbezogenen Daten nach Art eines elektronischen Scheckheftes. Ein solch elektronisches Scheckheft bietet insbesondere folgende Vorteile:
- Transparenz über Aussagen eines Fahrzeugeigentümers bzw. -besitzers gegenüber möglichen Kaufinteressenten.
- Transparenz über tatsächliche Tachostände, weil die Übermittlung der produkt-, das heißt fahrzeugspezifischen Daten an die Vermittlungsstelle allein durch eine hierfür autorisierte Stelle vorgenommen wird.
- Das erfindungsgemäße Verfahren läßt sich in bereits bestehende Flottenmanagementsysteme, die beispielsweise von Autoherstellern, Verleihunternehmen oder dergleichen verwendet werden, integrieren.
- Bei Verlust des vom Fahrzeugeigentümer bzw. -besitzer in ausgedruckter Form mitgeführten Scheckheftes kann auf einfache Weise ein Ersatzausdruck erstellt bzw. eine Datenrekonstruktion vorgenommen werden.
- Die für eine Dateneingabe autorisierten Stellen, das heißt die Kfz-Werkstätten können die eingegebenen Daten zwecks Analyse der Kundentreue statistisch auswerten (Loyalty Service).
- Fahrzeuge und Werkstätten können auf einfache Weise untereinander verglichen werden.
- Bestimmte Fehler und/oder Probleme bei bestimmten Fahrzeugen können auf einfache und schnelle Weise erkannt werden, was eine zuverlässige und schnelle Fehler- und/oder Problem behebung ermöglicht.
- Es wird die Möglichkeit geschaffen, eine Datenbankauswertung zum Zwecke statistischer Erhebungen durchzuführen, zum Beispiel über die Zuverlässigkeit von Fahrzeugen, durchzuführender Reparaturen, Wartungsintervalle oder dergleichen.
- Das System ist weitestgehend manipulationssicher, was für abfragende Dritte Sicherheiten bezüglich der Richtigkeit der abgefragten Daten schafft.

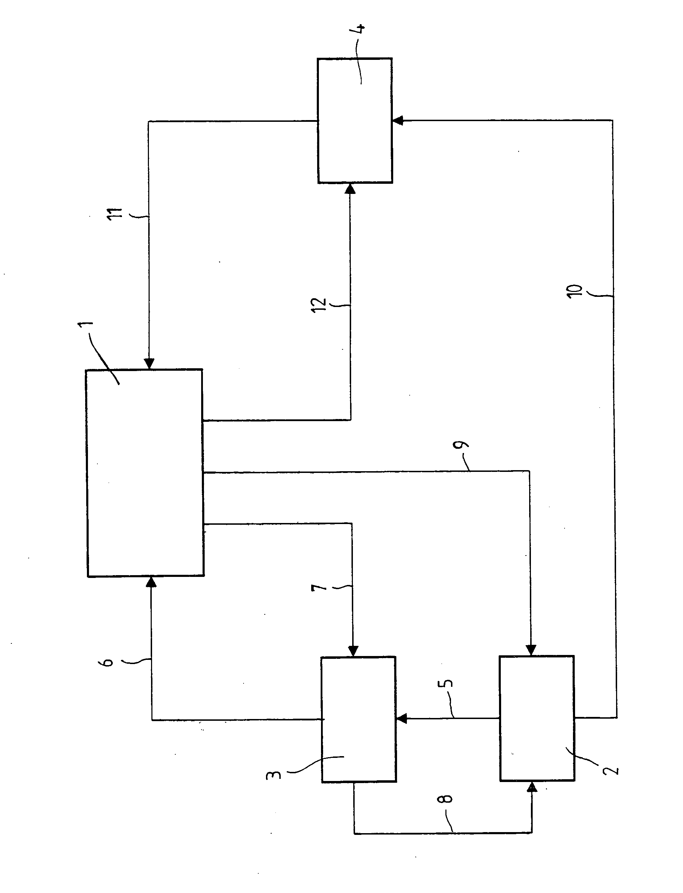

Weitere Merkmale und Vorteile der Erfindung ergeben sich aus der nachfolgenden Beschreibung anhand der Fig. Dabei zeigt die einzige Fig. 1 anhand eines Beispiels einen möglichen Verfahrensablauf.

Fig. 1 zeigt in schematischer Darstellung die Durchführung des erfindungsgemäßen Verfahrens am Beispiel eines Kraftfahrzeuges, dessen fahrzeugspezifischen Daten erfaßt und von einem Dritten nach dem erfindungsgemäßen Verfahren bereitgestellt und abgefragt werden.

Ein Fahrzeughalter 2 ist Kunde einer Werkstatt 3. In regelmäßigen Abständen übergibt der Fahrzeughalter 2 seiner Werkstatt 3 sein Fahrzeug zum Zwecke von Wartungs- und/oder Reparaturarbeiten. Im Ausführungsbeispiel nach Fig. 1 ist dies durch den Pfeil 5 symbolisiert.

Die Werkstatt 3 prüft das Fahrzeug des Fahrzeughalters und führt notwendige oder beauftragte Instandhaltungs- und/oder Reparaturarbeiten durch. Die Werkstatt 3 dokumentiert die durchgeführten Arbeiten und nimmt als hierfür autorisierte Stelle die fahrzeugspezifischen Daten auf, welche beispielsweise der Kilometerstand, die Garantiezeiten auf ausgeführte Werkstattarbeiten, durchgeführte Inspektionen, Reparaturen und/oder Unfallbeseitigungsarbeiten oder dergleichen sein können. Diese von der Werkstatt 3 aufgenommenen Daten werden an eine zentrale Vermittlungsstelle 1 übertragen, was in der Darstellung nach Fig. 1 durch den Pfeil 6 symbolisiert ist.

Die von der Werkstatt 3 aufgenommenen und an die zentrale Vermittlungsstelle 1 übersandten Daten umfassen zwecks einer eineindeutigen Zuordnung eine das Fahrzeug des Fahrzeughalters 2 eineindeutig identifizierende Kennung, beispielsweise die Fahrgestellnummer des Fahrzeuges. Die von der Werkstatt 3 aufgenommenen und an die zentrale Vermittlungsstelle 1 übertragenen Daten werden von der Vermittlungsstelle 1 auf Plausibilität überprüft. Im Falle einer negativ ausfallenden Plausibilitätsprüfung werden die von der Werkstatt 3 an die Vermittlungsstelle 1 übersandten Daten nicht angenommen, wobei die Werkstatt 3 über die negativ ausgefallene Plausibilitätsprüfung informiert wird. Die eingegebenen und vom Vermittlungssystem 1 als unrichtig erkannten Daten können von der Werkstatt 3 korrigiert und neu eingegeben werden. Bei nach der von der Vermittlungsstelle durchgeführten Plausibilitätsprüfung korrekten Daten wird die Werkstatt 3 über die Annahme der Daten durch die Vermittlungsstelle 1 informiert.

Die Werkstatt 3 kann die von der Vermittlungsstelle 1 gespeicherten Daten unter Angabe der eineindeutigen Kennung abfragen. In der Darstellung nach Fig. 1 ist dies durch den Pfeil 7 symbolisiert. Die Werkstatt 3 hat so die Möglichkeit, im Vorfeld durchzuführender Inspektions- und/oder Reparaturarbeiten die Historie des Fahrzeuges abzufragen, um so beispielsweise in Erfahrung zu bringen, ob Inspektionsintervalle oder dergleichen bereits abgelaufen, das heißt durchzuführende Inspektionsarbeiten überfällig sind.

Anhand der von der Vermittlungsstelle 1 an die Werkstatt 3 übertragenen Daten kann die Werkstatt 3 einen Ausdruck der von der Vermittlungsstelle 1 gespeicherten Daten erzeugen, der an den Fahrzeughalter 2 zur Mitführung im Fahrzeug übergeben werden kann. In der Darstellung nach Fig. 1 ist dies durch den Pfeil 8 symbolisiert.

Dem Fahrzeughalter 2 bleibt es natürlich unbenommen, selbst eine Anfrage an die Vermittlungsstelle 1 zu richten und die von der Werkstatt 3 an die Vermittlungsstelle übertragenen Daten durch Anwahl der Vermittlungsstelle 1 abzufragen. Die Vermittlungsstelle 1 überträgt die dort gespeicherten Daten dann direkt an den Fahrzeughalter 2. Dies kann beispielsweise mittels Telefon oder Internet erfolgen. Die Informationsvermittlung von der Vermittlungsstelle 1 an den Fahrzeughalter 2 ist in der Darstellung nach Fig. 1 durch den Pfeil 9 symbolisiert.

In diesem Zusammenhang kann vorgesehen sein, daß die Werkstatt 3 neben rein fahrzeugspezifischen Daten auch personenbezogene Daten eingibt, deren Abfrage allerdings nur dem Fahrzeughalter 2 selbst ermöglicht ist. Sowohl die Werkstatt 3 als auch Dritte 4 haben keinen Zugriff auf solch personenbezogenen Daten. Die Eingabe von personenbezogenen Daten ist im übrigen lediglich optional.

Für den Fall, daß der Fahrzeughalter 2 sein Fahrzeug verkaufen möchte, kann er einem Interessenten, das heißt einem Dritten 4 die sein Fahrzeug eineindeutig identifizierende Kennung, das heißt die Fahrgestellnummer mitteilen. In der Darstellung nach Fig. 1 ist dies durch den Pfeil 10 symbolisiert.

Der Kaufinteressent, also der Dritte 4 fragt bei der Vermittlungsstelle 1 die fahrzeugspezifischen Daten an, und zwar unter vorheriger Mitteilung der das Fahrzeug des Fahrzeughalters 2 eineindeutig identifizierenden Kennung, was in der Darstellung nach Fig. 1 durch den Pfeil 11 symbolisiert ist. Zur Abfrage der fahrzeugspezifischen Daten durch den Dritten 4 dient eine kommunikationstechnische Verbindung zwischen dem Dritten 4 und der Vermittlungsstelle 1, die beispielsweise via Telefon oder Internet realisiert sein kann.

Auf die Anfrage des Dritten 4 hin überträgt das Vermittlungssystem 1 die zu einem eineindeutig identifizierten Fahrzeug wunschgemäß vom Dritten 4 angefragten Daten an den Dritten 4. In der Darstellung nach Fig. 1 ist dies durch den Pfeil 12 symbolisiert.

Die Datenabfrage durch den Dritten 4 ist zu Lasten des Dritten 4 kostenpflichtig, weshalb die Vermittlungsstelle 1 die Kosten für die Datenabfrage dem Dritten 4 automatisch in Rechnung stellt.

Das vorbeschriebene Verfahren kann den Verkauf eines Kraftfahrzeuges sowohl für den Fahrzeughalter als auch für den Kaufinteressenten, das heißt den Dritten 4 erheblich vereinfachen. So kann der Fahrzeughalter 2 beispielsweise im Internet sein Kaufpreisangebot plazieren. Der Kaufinteressent, der die im Kaufpreisangebot gemachten Angaben überprüfen möchte, nutzt das elektronische Scheckheft nach dem erfindungsgemäßen Verfahren, um die Historie des zum Verkauf stehenden Fahrzeuges abzufragen. Dabei kann er hinsichtlich der abgefragten Daten sicher sein, daß diese die tatsächliche Fahrzeughistorie unverfälscht, das heißt richtig wiedergeben, da die Dateneingabe ausschließlich durch eine autorisierte Stelle, das heißt die Werkstatt 3 erfolgt. Der Dritte 4 hat insoweit Gewißheit über die Angaben des Fahrzeughalters zum Kilometerstand, zu der Anzahl der Vorbesitzer, dem Tag der Erstzulassung, den technischen Daten des Kraftfahrzeuges, den durchgeführten Inspektionen und/oder Reparaturarbeiten und dergleichen.

Zum Zwecke der Informationsvermittlung an den Dritten 4 kann beispielsweise vorgesehen sein, daß dieser via Telefon an die Vermittlungsstelle eine SMS mit der Fahrgestellnummer als Kennwort schickt. Die Vermittlungsstelle 1 wickelt die Anfrage automatisch anhand der angegebenen Fahrgestellnummer ab und versendet an den Dritten 4 eine die fahrzeugspezifischen Daten enthaltene E-Mail oder SMS. In diesem Zusammenhang kann vorgesehen sein, daß die von der Vermittlungsstelle zur Abfrage bereitgestellten Daten klassifiziert sind und der Dritte 4 die Möglichkeit hat, fahrzeugspezifische Daten klassenweise abzufragen.

### Bezugszeichenliste

1 Vermittlungsstelle
2 Fahrzeughalter
3 Werkstatt
4 Dritter
5-12 Pfeil

## Patentansprüche

1. Verfahren zur Bereitstellung produktspezifischer Daten,
- bei dem die produktspezifischen Daten eines jeweiligen Produkts von
- einer hierfür autorisierten Stelle (3) aufgenommen und an eine zentrale Vermittlungsstelle (1) übertragen werden, wobei die produktspezifischen Daten eine das jeweilige Produkt eineindeutig identifizierende Kennung aufweisen,
- bei dem von der Vermittlungsstelle (1) die an die Vermittlungsstelle (1) übertragenen produktspezifischen Daten automatisch aufbereitet und auf Plausibilität geprüft werden,
- bei dem auf Anfrage eines Dritten (4) eine kommunikationstechnische Verbindung zwischen dem Dritten (4) und der Vermittlungsstelle (1) aufgebaut wird
- und bei dem von der Vermittlungsstelle (1) nach vorheriger Mitteilung der das jeweilige Produkt eineindeutig identifizierenden Kennung durch den Dritten (4) die produktspezifischen Daten an den Dritten (4) übermittelt werden.

2. Verfahren nach Anspruch 1, bei dem die Kosten für die Datenübermittlung an den Dritten (4) dem Dritten (4) automatisch in Rechnung gestellt werden.

3. Verfahren nach Anspruch 1 oder 2, bei dem die kommunikationstechnische Verbindung via Telefon aufgebaut wird.

4. Verfahren nach Anspruch 1 oder 2, bei dem die kommunikationstechnische Verbindung via Internet aufgebaut wird.

5. Verfahren nach einem der vorhergehenden Ansprüche, bei dem die produktspezifischen Daten eines jeweiligen Produkts in Abfrageklassen unterteilt werden.

6. Verfahren nach einem der vorhergehenden Ansprüche, bei dem die produktspezifischen Daten einer Mehrzahl von Produkten miteinander verglichen werden.

7. Verfahren nach einem der vorhergehenden Ansprüche, bei dem die produktspezifischen Daten von der Vermittlungsstelle (1) gespeichert werden.

8. Verfahren nach einem der vorhergehenden Ansprüche, bei dem die produktspezifischen Daten von der Vermittlungsstelle (1) statistisch ausgewertet werden.
